# EUROPEAN PATENT SPECIFICATION

(11) **EP 0 506 361 B1**
(45) Date of publication and mention of the grant of the patent: **07.12.1994**
(21) Application number: 92302566.2
(22) Date of filing: 25.03.1992
(51) Int. Cl.: B60C 11/06

(54) **Vehicle tyre**
Fahrzeugreifen
Bandage pneumatique pour véhicule

(30) Priority: 27.03.1991 DE 4110125
(43) Date of publication of application: 30.09.1992
(73) Proprietor: SP REIFENWERKE GMBH, 63450 Hanau (DE)
(72) Inventor: Sponagel, Peter, D-6200 Wiesbaden (DE)
(74) Representative: Stewart, Charles Geoffrey

(56) References cited:
- EP-A- 0 370 747
- EP-A- 0 402 021
- US-A- 4 388 960
- PATENT ABSTRACTS OF JAPAN vol. 13, no. 385 (M-864)(3733) 25 August 1989; & JP-A-1136801

## Description

The invention relates to a vehicle tyre with a tread having a longitudinally orientated pattern which is in particular formed by ribs, bars or blocks between which at least longitudinal grooves and optionally also transverse grooves are arranged. A tyre according to the preamble of claim 1 is known from US-A-4 388 960.

In particular in patterns which are longitudinally orientated, and which thus have pronounced peripheral or longitudinal grooves, it has been found that the tyres often react very sensitively to longitudinal grooves in the road.

Longitudinal grooves in the road are for example to be found on road surfaces which have been milled down during road maintenance preparatory to applying a new road surface.

In addition to such longitudinal grooves in the road which are only temporary present the carriageway surfaces of some motorways are also provided with longitudinal grooves in order to improve safety by reducing aquaplaning. Such longitudinal grooves, which are for example to be found on the motorway around Paris and Los Angeles, are arranged at a spacing of ca. 20mm and have a width of ca. 5 mm.

If now the spacing of mutually corresponding longitudinal groove wedges or blocks edges of the pattern essentially correspond with the spacing of the grooves on the road, then lateral interaction forces are generated which lead to a wandering movement of the vehicle on the carriageway. Such wandering movements of the vehicle are not only disturbing but can also lead to dangerous driving situations, in particular on motorway with a high level of traffic.

The problem underlying the invention and thus the object of the invention is to provide a vehicle tyre with a longitudinally orientated profile of the initially named kind which has high directional or track stability independently of the structure of the road surface.

Accordingly the invention provides a vehicle tyre with a tread having a longitudinally orientated pattern which is in particular formed by ribs, bars or blocks between which at least longitudinal grooves and optionally also transverse grooves are arranged, characterised in that the length (a) of the longitudinal grooves in the running direction (L) amounts to between 50 % and 180% of the length A of the ground contact patch of the tyre and in that two respective longitudinal grooves which follow one another in the running direction are displaced stepwise relative to one another.

By means of the displacement, in accordance with the invention, of the longitudinal grooves of the patterns, which have lengths which lie in the range of the length of the ground contact patch of the tyre, it is ensured that the so-called "catching" of the edges of the longitudinal tread pattern grooves on the longitudinal edges of the road grooves is disturbed by the continuous displacement, so that the lateral forces generated by interaction of the road grooves with the longitudinal profile grooves change their orientation many times at short intervals during one rotation of the vehicle tyre and can thus practically not have any effect.

The basic concept underlying the invention is thus to be seen in that, in comparison with the circumferential length of the vehicle tyre, short longitudinal groove sections are provided which are so displaced relative to one another that sequential longitudinal groove sections are alternately arranged to the right or left of road groove which may be present. Thus, if the longitudinal groove which is momentarily contacting the carriageway essentially runs on the right side of a longitudinal road groove, then the subsequent longitudinal groove runs essentially on the left side of the carriageway groove.

A further advantage lies in the fact that, due to the displacement of the longitudinal grooves or of the pattern elements which follow one another in the circumferential direction, water which is present on the carriageway while travelling can be better pressed into the subsequent groove region which arises through the displacement. Thus, through the layout of the pattern in accordance with the invention an improved water accommodation in the pattern is also achieved.

Also the transverse displacement "g" of longitudinal grooves which follow one another either directly or with a spacing may be so selected that one longitudinal sidewall of one longitudinal groove is aligned with respect to the other longitudinal sidewall of the other longitudinal groove in such a way that the corresponding sidewalls essentially adjoin one another. The transverse displacement "g" of two sequential longitudinal grooves may also correspond at least to the largest width "b" of the narrower longitudinal groove. It is preferable that when the transverse displacement "g" of two sequential longitudinal grooves is larger than the width "b" of the displaced longitudinal groove at its end facing the other longitudinal groove.

A further improvement in the water displacement may be achieved in accordance with the invention by two sequential longitudinal grooves displaced transversely relative to one another and so arranged that they overlap in the running direction, with the length of the overlap corresponding to less than 25% of the length of the longitudinal grooves.

In order to further improve the directional stability, i.e. the ability to correctly follow the track, and to move reliably prevent "catching" of the pattern groove edges, there may be provided two sequential mutually displaced longitudinal grooves having a spacing relative to one another in the running direction which amounts to less than 25% of the length "a" of the longitudinal grooves. In this arrangement it is expedient when two sequential longitudinal grooves which follow one another are connected with one another by a transverse groove. In this way the water displacement on wet carriageways is advantageously influenced since carriageway water present in the longitudinal grooves can be pressed through the transverse grooves into subsequent groove regions.

Furthermore the longitudinal grooves may be arranged symmetrically to the centreline of the tread which determines the central plane of the tyre. Moreover, the longitudinal grooves may be expediently rectangular in plan view. They may however also be waveshaped and preferably extend over one wavelength. Alternatively they can be of wedge shape in plan view and can indeed be essentially diamond shaped in plan view. In order to achieve a permanently good water pick up by the pattern over the circumference of the vehicle tyre provision is preferably made so that the total cross sectional area of the longitudinal grooves arranged alongside one another over the whole tread is essentially constant in the peripheral direction.

In the context of the invention it can also be of advantage to provide the ribs, blocks, bars and the like which bound the longitudinal grooves and the transverse grooves with specially shaped grooves or sipes. Such ribs, blocks, bars and the like are also of practical significant independently of the described longitudinal groove displacement, however they can also be particularly advantageously used in combination with the longitudinal groove displacement.

Through the grooves or sipes provided at the edges of the pattern blocks or bars provision is made for better intermeshing of the profile with the carriageway surface, which results in a better transfer of braking and traction forces. With this measure of the invention, which also improves the directional stability of the vehicle tyre, the winter characteristics of the tyre are in particular improved by the special intermeshing.

The grooves conveniently have a with of 0.2mm to 1.5mm and a length in the running direction of 2mm to 8mm. The grooves preferably also have a rectangular cross section and they may also have a V-shaped cross section and optionally a v shaped cross section with convexly rounded side surfaces. As an alternative the grooves can have a stair like stepped cross section.

The invention will now be described in more detail in the following by way of example and with reference to the drawings in which are shown:-
Fig.1. is a schematic developed plan view of a part of the tread
Fig.2. is a partly sectioned perspective view of the tread of Fig.1
Fig.3. is a schematic plan view of an individual pattern block,
Fig.4. are various enlarged illustrations of an individual groove or sipe corresponding to the circle IV in Fig 3 and
Figs 5a to 5g are various plan views of treads in accordance with Fig.1 with various schematically illustrated patterns.

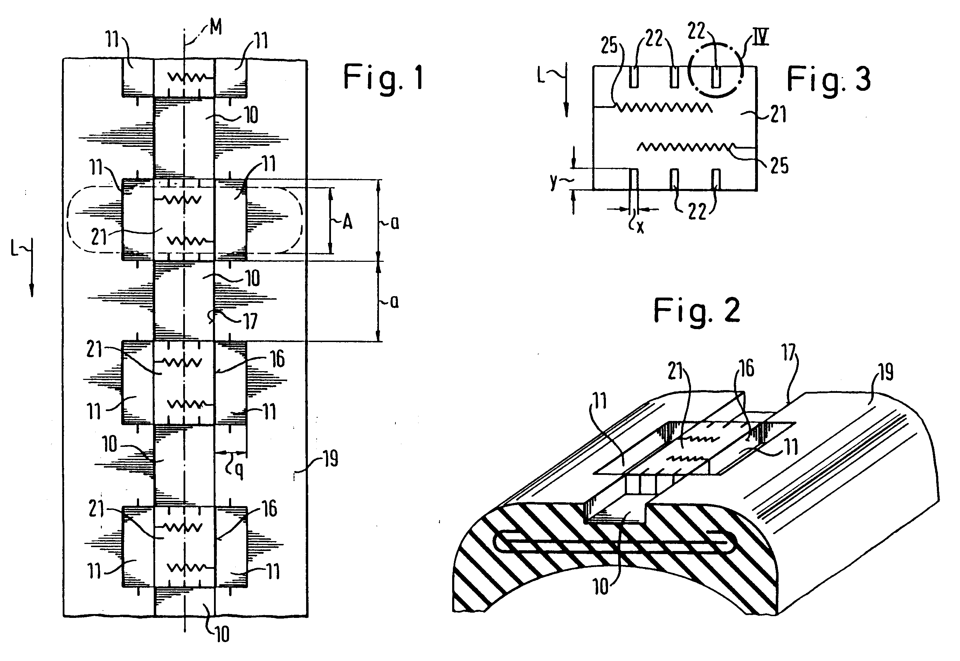

Figs.1 and 2 show a tread 19 of a vehicle tyre in which a longitudinal groove arrangement is provided symmetrically to the centreline M which defines the central plane of the tyre. The transverse grooves which are generally found in the tyre patterns are not shown in this illustration in order to clearly emphasis the important principle of the invention relating to the arrangement of longitudinal grooves and the layout of the longitudinal grooves. The transverse grooves which are as a rule present can be arranged and formed in conventional manner.

The longitudinal groove arrangement has first longitudinal grooves 10, the length "a" of which is larger than the contact patch length A of the vehicle tyre on the road. Naturally this tread strip illustration in accordance with Fig.1. and 2 should only be understood as a schematic illustration to explain the principle of the present invention. In the actual embodiment of a tread in accordance with the invention any desired number of corresponding designed longitudinal grooves can be provided in conjunction with conventional transverse grooves.

The contact surface shown in Fig.1. by the broken line frame has one of many possible forms. The longitudinal groove 10 which lies symmetrically with respect to the centreline M is adjoined in the longitudinal direction L by two longitudinal grooves 11 which have the same length "a" as the longitudinal groove 10. The longitudinal grooves 11 are displaced relative to longitudinal groove 10 such that the right hand sidewall 17 of the longitudinal groove 10 in Fig.1 is aligned with the left hand sidewall 16 of the corresponding right hand longitudinal groove 11. The displacement or offset "g" of the longitudinal groove 11 thereby corresponds to its width.

Thus, in the running direction L of the vehicle tyre, a respective longitudinal groove region adjoins a block region at a line of displacement and vice versa.

A pattern block 21 bounded by the longitudinal grooves 10, 11 has, as schematically illustrated with respect to Fig.3, two sipes 25 and also a plurality of blind grooves 22, i.e. grooves with a dead end, which are provided at the edges of the block 21 which point in the circurmferential direction, i.e. in the direction of running.

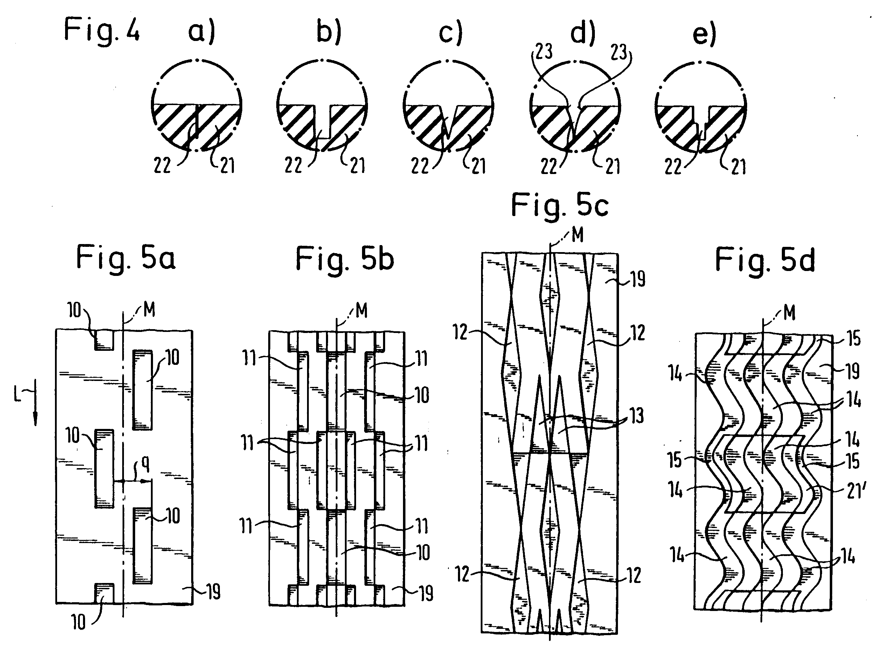

The blind grooves 22 can have different cross sectional shapes depending on the particular requirements placed on the vehicle tyres as is illustrated with respect to Fig.4. Fig 4a shows a thin slit like sipe 22. The groove 22 in Fig.4b has an essentially U-shaped rectangular cross section.

The grooves 22 of the Figs 4c and d have V-shaped cross section, and the side surface 23 (Fig 4d) can be convexly curved. In Fig.4e a groove 22 is shown in which a step is provided in the side surfaces. The width x of the grooves 22 preferably lies between 0.2mm, for example with the sipes 22 of Fig 4a and 1.5mm, in each case measured at the outer side of the profile block 21. The length "y" of the groove 22 as seen in the longitudinal direction L preferably amounts to between 2 and 8mm.

The layout and arrangement of the grooves described with reference to Figs 3 to 4e is fundamentally of practical significance and also independently of the longitudinal groove displacement explained with reference to Fig 1 and 2 and these grooves can be used in tyres of any desired structure. In the context of the present invention they may however advantageously be in addition.

When a vehicle tyre with a tread pattern which is formed in accordance with the illustration of principle in Fig.1, but with a plurality of such displacement longitudinal grooves, and optionally also with transverse grooves, runs on a road provided with longitudinal grooves, and when the line determined by the sidewalls 16, 17 of the longitudinal grooves, 10, 11 lies on a road groove then if, for example, the left hand longitudinal sidewall 16 of the groove 11 contacts the right hand side of the road groove it can exert a lateral force on the tyre directed to the left. As soon as the vehicle tyre has rolled on further by a longitudinal groove length "a" it will stand with the longitudinal groove 10 which is displaced relative to the longitudinal groove 11 on the carriageway. The right longitudinal sidewall 17 of the longitudinal groove 10 then contacts the road groove and can enter into engagement with the left hand side of the road groove whereby a lateral force directed to the right acts on the tyre.

During further rolling of the vehicle tyre the corresponding longitudinal sidewalls 16 and 17 of the longitudinal grooves 10, 11 the alternatively enter into engagement with the road groove so that the lateral forces generated by the co-operation of the tread profile grooves and of the road grooves act with rapid alternation to the right and to the left so that they essentially cancel one another and cannot exert any essential influence on the directional stability of the tyre.

If the vehicle tyre of the invention runs on a wet carriageway then the water which is located on the carriageway will be pressed into the longitudinal groove region which is instantaneously in contact with the ground, and the displacement of the tread profile grooves will force the water through the pattern block and in each case into the respectively corresponding next groove region whereby an improved throughflow of water is achieved. Fig.5a schematically shows a tread 19 in which two longitudinal grooves 10 which follow one another in the longitudinal direction L have an offset "g" which is larger than the width of the longitudinal grooves 10.

In the tread strip 19 of Fig 5b first broad longitudinal grooves 10 are provided which are arranged symmetrically on the centreline M of the tread strip 19. Second longitudinal grooves 11 are arranged symmetrically to the centreline M on both sides of the longitudinal grooves 10, with the width of the longitudinal grooves 11 corresponding approximately to half of the first longitudinal grooves 10.

In the running direction the longitudinal grooves 10 are followed by two longitudinal grooves 11 the width of which likewise corresponds essentially to the half width of the longitudinal grooves 10. The longitudinal grooves 11 are displaced relative to longitudinal grooves 10 as in the case of Fig.1.

The outwardly disposed longitudinal grooves 11 respectively alternate with longitudinal grooves 11 of the same width which are likewise arranged symmetrically to the centreline.

Fig 5c shows a tread strip 19 with diamond shaped or wedge shaped longitudinal grooves 12 or 13 respectively. In this arrangement the longitudinal grooves 12, 13 are also symmetrically arranged relative to the centreline M. The cross sectional area of the longitudinal grooves 12,13 is thereby preferably of the same size at each circumferential position and this is also the case with the other illustrated profile arrangements.

Fig 5d shows a tread 19 with wave-like longitudinal grooves 11 between which corresponding wave like profile blocks 21 are arranged. The longitudinal grooves 14 are thereby displaced relative to one another in accordance with the longitudinal grooves 10, 11 in Fig.1. In addition, longitudinal grooves 15 are provided which are narrower than the longitudinal grooves 14 and which respectively alternate with the outer longitudinal grooves 14 without displacement.

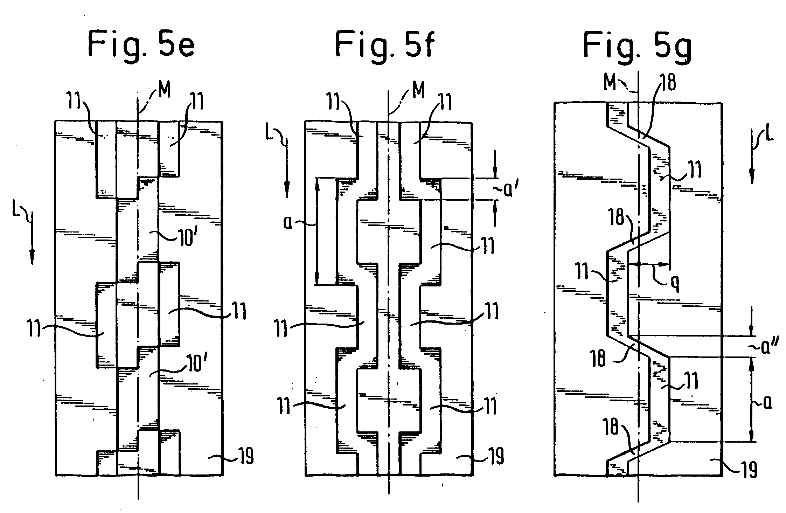

Fig 5e shows a longitudinal groove arrangement of a tread strip 19 in which the vehicle of longitudinal grooves 10′ lying on the centreline M have edges lying in the running direction which are so stepped that the narrow transversely displaced longitudinal grooves 11 on the one side of the centreline M in the running direction L are displaced relative to the other narrow transversely displaced longitudinal grooves 11.
Such stepped edges can also be provided with the other profile arrangements.

Fig. 5f shows, by way of the example of a longitudinal groove pattern of a tread 19 forced symmetrically to the centreline M, that the individual longitudinal grooves 11 as seen in the running direction L each have an overlap region. The length "a′" of this overlap region is thereby relatively small and amounts at most to 25% of the length "a" of the longitudinal grooves 11. In tills way particularly good water displacement is ensured when the tyre rolls off on a wet carriageway.

Fig 5g schematically shows the transition between longitudinal grooves 11 in which the lateral displacement "q" is larger than the width of the longitudinal grooves 11. In this case respective longitudinal grooves which also have a spacing "a˝" in the running direction L are connected to one another by transverse grooves 18. The spacing "a˝" thereby amounts advantageously to at most 25% of the length "a" of the longitudinal grooves.

## Claims

1. A vehicle tyre with a tread having a longitudinally orientated pattern which is in particular formed by ribs, bars or blocks between which at least longitudinal grooves and optionally also transverse grooves are arranged, characterised in that the length (a) of the longitudinal grooves (10, 11, 12,13,14,15) in the running direction (L) amounts to between 50% and 180% of the length A of the ground contact patch of the tyre; and in that two respective longitudinal grooves (10,11,12,13,14), which follow one another in the running direction are displaced stepwise relative to one another.

2. A vehicle tyre in accordance with claim 1, characterised in that the transverse displacement (g) of longitudinal grooves (10,11,12,13,14), which follow one another either directly or with a spacing is so selected that the one longitudinal sidewall (16) of the one longitudinal groove (10,11,12,13,14,15), is aligned with the respective other longitudinal sidewall (17) of the other longitudinal groove (10,11,12,13,14,15) in such a way that the corresponding sidewalls (16, 17) essentially adjoin one another.

3. A vehicle tyre in accordance with claim 1, characterised in that the transverse displacement (g) of two sequential longitudinal grooves (10,11,12,13,14,15), corresponds at least to the largest width (b) of the narrower longitudinal groove (10,11,12,13,14,15).

4. A vehicle tyre in accordance with claim 3, characterised in that the transverse displacement (g) of two sequential longitudinal grooves (10,11,12,13,14,15), is larger than the width (b) of the displaced longitudinal groove at its end facing the other longitudinal groove (10).

5. A vehicle tyre in accordance with one of the preceding claims, characterised in that two sequential longitudinal grooves (10) which are transversely displaced relative to one another are so arranged that they overlap in the running direction (L) with the length (a′) of the overlap corresponding to less than 25% of the length (a) of the longitudinal grooves (10).

6. A vehicle tyre in accordance with one of the claims 1 to 4, characterised in that two sequential mutually displaced longitudinal grooves (10) have a spacing (a˝), relative to one another in the running direction which amounts to less than 25% of the length (a) of the longitudinal grooves (10).

7. A vehicle tyre in accordance with the claims 4,5 or 6, characterised in that two sequential mutually displaced longitudinal grooves (10) are connected with one another by a transverse groove (18).

8. Vehicle tyre in accordance with one of the preceding claims, characterised in that the longitudinal grooves (10,11,12,13,14) are arranged symmetrical to the centreline (M) of the tread strip (19) which determines the central plane of the tyre.

9. A vehicle tyre in accordance with one of the preceding claims, characterised in that the longitudinal grooves (10,11) are rectangular in plan view.

10. A vehicle tyre in accordance with one of the claims 1 to 8, characterised in that the longitudinal grooves (14,15) are waveshaped, and preferably extend over one wavelength.

11. A vehicle tyre in accordance with one of the claims 1 to 8, characterised in that the longitudinal grooves (13) are of wedge shape in plan view.

12. A vehicle tyre in accordance with one of the claims 1 to 8, characterised in that the longitudinal grooves (12) are essentially diamond shaped in plan view.

13. A vehicle tyre in accordance with one of the preceding claims, characterised in that the total cross sectional area of the longitudinal grooves (10,11,12,13,14,15) arranged alongside one another over the whole tread is essential constant in the peripheral direction.

14. A vehicle tyre, in particular in accordance with one of the preceding claims, the tread of which has ribs, bars, blocks or the like defining longitudinal and transverse grooves, characterised in that grooves (22) extending in the running direction (L) are provided in at least the transverse walls (20) of the ribs, bars or blocks (231) which preferably bound the longitudinal grooves (10,11,12,13,14,15) in the running direction (L0.

15. A vehicle tyre in accordance with claim 14, characterised in that the grooves (22) have a width (x) of 0.2mm to 1.5mm.

16. A vehicle tyre in accordance with claim 14 or claim 15, characterised in that the grooves (22) have a length (Y) in the running direction (L) of 2mm to 8mm.

17. A vehicle tyre in accordance with one of the claims 14,15 or 16, characterised in that the grooves (22) have a rectangular cross section.

18. A vehicle tyre in accordance with one of the claims 14,15 or 16, characterised in that the grooves (22) have a V-shaped cross section.

19. A vehicle tyre in accordance with claim 18, characterised in that the V-shaped cross section has convexly rounded side surfaces (22).

20. A vehicle tyre in accordance with the claims 14,15 or 16 characterised in that the grooves (22) have a stair like stepped cross section.

## Patentansprüche

1. Ein Fahrzeugreifen mit einer Lauffläche, die ein in Längsrichtung orientiertes Profil hat, das insbesondere durch Rippen, Balken oder Blöcke gebildet ist, zwischen denen zumindest Längsrillen und wahlweise auch Querrillen angeordnet sind,
dadurch **gekennzeichnet,**
daß die Länge (a) der Längsrillen (10, 11, 12, 13, 14, 15) in der Laufrichtung (L) zwischen 50% und 180% der Länge A der Bodenkontaktteilung des Reifens beträgt; und daß zwei entsprechende Längsrillen (10, 11, 12, 13, 14), die einander in der Laufrichtung folgen, stufenweise gegeneinander versetzt sind.

2. Ein Fahrzeugreifen nach Anspruch 1,
dadurch **gekennzeichnet,**
daß der Querversatz (g) der Längsrillen (10, 11, 12, 13, 14), die einander entweder direkt oder mit einem Abstand folgen, so gewählt ist, daß die eine in Längsrichtung verlaufende Seitenwandung (16) der einen Längsrille (10, 11, 12, 13, 14, 15) zu der entsprechenden anderen in Längsrichtung verlaufenden Seitenwandung (17) der anderen Längsrille (10, 11, 12, 13, 14, 15) in der Weise ausgerichtet ist, daß die entsprechenden Seitenwandungen (16, 17) im wesentlichen aneinander angrenzen.

3. Ein Fahrzeugreifen nach Anspruch 1,
dadurch **gekennzeichnet,**
daß der Querversatz (g) von zwei aufeinanderfolgendenLängsrillen (10, 11, 12, 13, 14, 15) mindestens der größten Breite (b) der engeren Längsrille (10, 11, 12, 13, 14, 15) entspricht.

4. Ein Fahrzeugreifen nach Anspruch 3,
dadurch **gekennzeichnet,**
daß der Querversatz (g) zweier aufeinanderfolgender Längsrillen (10, 11, 12, 13, 14, 15) größer ist als die Breite (b) der versetzten Längsrille an ihrem Ende, das der anderen Längsrille (10) zugewandt ist.

5. Ein Fahrzeugreifen nach einem der vorhergehenden Ansprüche,
dadurch **gekennzeichnet,**
daß zwei aufeinanderfolgende Längsrillen (10), die in Querrichtung relativ zueinander versetzt sind, so angeordnet sind, daß sie sich in der Laufrichtung (L) überlappen, wobei die Länge (a') der Überlappung weniger als 25% der Länge (a) der Längsrillen (10) entspricht.

6. Ein Fahrzeugreifen nach einem der Ansprüch 1 bis 4,
dadurch **gekennzeichnet,**
daß zwei aufeinanderfolgende gegeneinander versetzte Längsrillen (10) einen Abstand (a'') zueinander in der Laufrichtung haben, der weniger als 25% der Länge (a) der Längsrillen (10) beträgt.

7. Ein Fahrzeugreifen nach den Ansprüchen 4, 5 oder 6,
dadurch **gekennzeichnet,**
daß zwei aufeinanderfolgende gegeneinander versetzte Längsrillen (10) miteinander durch eine Querrille (18) verbunden sind.

8. Ein Fahrzeugreifen nach einem der vorhergenden Ansprüche,
dadurch **gekennzeichnet,**
daß die Längsrillen (10, 11, 12, 13, 14) mittig zu der Mittellinie (M) des Laufflächenstreifens (19), welche die Mittelebene des Reifens bestimmt, angeordnet sind.

9. Ein Fahrzeugreifen nach einem der vorhergehenden Ansprüche,
dadurch **gekennzeichnet,**
daß die Längsrillen (10, 11) in der Draufsicht rechteckig sind.

10. Ein Fahrzeugreifen nach einem der Ansprüche 1 bis 8,
dadurch **gekennzeichnet,**
daß die Längsrillen (14, 15) wellenförmig sind und sich vorzugsweise über eine Wellenlänge erstrecken.

11. Ein Fahrzeugreifen nach einem der Ansprüche 1 bis 8,
dadurch **gekennzeichnet,**
daß die Längsrillen (13) in der Draufsicht keilförmig sind.

12. Ein Fahrzeugreifen nach einem der Ansprüche 1 bis 8,
dadurch **gekennzeichnet,**
daß die Längsrillen (12) in der Draufsicht im wesentlichen diamantförmig sind.

13. Ein Fahrzeugreifen nach einem der vorhergehenden Ansprüche,
dadurch **gekennzeichnet,**
daß der gesamte Querschnittsbereich der Längsrillen (10, 11, 12, 13, 14, 15), die längsseits nebeneinander über die gesamte Lauffläche angeordnet sind, im wesentlichen in Umfangsrichtung konstant ist.

14. Ein Fahrzeugreifen, insbesondere nach einem der vorhergehenden Ansprüche, dessen Lauffläche Rippen, Balken, Blöcke oder dgl. hat, die Längs- und Querrillen definieren,
dadurch **gekennzeichnet,**
daß die Rillen (22), die sich in der Laufrichtung (L) erstrecken, zumindest in den Querwandungen (20) der Rippenn Balken oder Blöcke (231) vorgesehen sind, die vorzugsweise die Längsrillen (10, 11, 12, 13, 14, 15) in der Laufrichtung (L) begrenzen.

15. Ein Fahrzeugreifen nach Anspruch 14,
dadurch **gekennzeichnet,**
daß die Rillen (22) eine Breite (x) von 0,2 mm bis 1,5 mm haben.

16. Ein Fahrzeugreifen nach Anspruch 14 oder 15,
dadurch **gekennzeichnet,**
daß das die Rillen (22) eine Länge (Y) in der Laufrichtung (L) von 2 mm bis 8 mm haben.

17. Ein Fahrzeugreifen nach einem der Ansprüche 14, 15 oder 16,
dadurch **gekennzeichnet,**
daß die Rillen (22) einen rechteckigen Querschnitt haben.

18. Ein Fahrzeugreifen nach einem der Ansprüche 14, 15 oder 16,
dadurch **gekennzeichnet,**
daß die Rillen (22) einen V-förmigen Querschnitt haben.

19. Ein Fahrzeugreifen nach Anspruch 18,
dadurch **gekennzeichnet,**
daß der V-förmige Querschnitt konvex abgerundete Seitenflächen (22) hat.

20. Ein Fahrzeugreifen nach den Ansprüchen 14, 15 oder 16,
dadurch **gekennzeichnet,**
daß die Rillen (22) einen treppenähnlich gestuften Querschnitt haben.

## Revendications

1. Pneumatique pour véhicule, ayant une bande de roulement qui possède une sculpture d'orientation longitudinale qui est formée en particulier par des nervures, des barres ou des blocs entre lesquels sont placées au moins des gorges longitudinales et éventuellement aussi des gorges transversales, caractérisé en ce que la longueur (a) des gorges longitudinales (10, 11, 12, 13, 14, 15) dans la direction de roulement (L) est comprise entre 50 et 180 % de la longueur A de la région de contact avec le sol du pneumatique, et en ce que deux gorges longitudinales respectives (10, 11, 12, 13, 14) qui se suivent dans la direction de roulement sont décalées par paliers les unes par rapport aux autres.

2. Pneumatique pour véhicule selon la revendication 1, caractérisé en ce que le décalage transversal (g) des gorges longitudinales (10, 11, 12, 13, 14) qui se suivent soit directement, soit avec un certain espacement est choisi de manière qu'un flanc longitudinal (16) d'une première gorge longitudinale (10, 11, 12, 13, 14, 15) soit aligné sur l'autre flanc longitudinal respectif (17) de l'autre gorge longitudinale (10, 11, 12, 13, 14, 15) et que les flancs correspondants (16, 17) soient essentiellement adjacents.

3. Pneumatique pour véhicule selon la revendication 1, caractérisé en ce que le décalage transversal (g) de deux gorges longitudinales successives (10, 11, 12, 13, 14, 15) correspond au moins à la plus grande largeur (b) de la gorge longitudinale relativement étroite (10, 11, 12, 13, 14, 15).

4. Pneumatique pour véhicule selon la revendication 3, caractérisé en ce que le décalage transversal (g) de deux gorges longitudinales successives (10, 11, 12, 13, 14, 15) est supérieur à la largeur (b) de la gorge longitudinale décalée à son extrémité tournée vers l'autre gorge longitudinale (10).

5. Pneumatique pour véhicule selon l'une des revendications précédentes, caractérisé en ce que deux gorges longitudinales successives (10) qui sont décalées transversalement l'une part rapport à l'autre sont disposées afin qu'elles se recouvrent dans la direction de roulement (L), la longueur (a') de recouvrement correspondant à moins de 25 % de la longueur (a) des gorges longitudinales (10).

6. Pneumatique pour véhicule selon l'une des revendications 1 à 4, caractérisé en ce que deux gorges longitudinales successives décalées mutuellement (10) présentent un espacement (a'') l'une par rapport à l'autre dans la direction de roulement qui atteint moins de 25 % de la longueur (a) des gorges longitudinales (10).

7. Pneumatique pour véhicule selon la revendication 4, 5 ou 6, caractérisé en ce que deux gorges longitudinales successives (10) qui sont décalées mutuellement sont raccordées l'une à l'autre par une gorge transversale (18).

8. Pneumatique pour véhicule selon l'une des revendications précédentes, caractérisé en ce que les gorges longitudinales (10, 11, 12, 13, 14) sont disposées symétriquement à l'axe central (M) de la bande de roulement (19) qui détermine le plan central du pneumatique.

9. Pneumatique pour véhicule selon l'une des revendications précédentes, caractérisé en ce que les gorges longitudinales (10, 11) ont une forme rectangulaire en plan.

10. Pneumatique pour véhicule selon l'une des revendications 1 à 8, caractérisé en ce que les gorges longitudinales (14, 15) ont une forme sinueuse et sont disposées de préférence sur une longueur d'onde.

11. Pneumatique pour véhicule selon l'une des revendications 1 à 8, caractérisé en ce que les gorges longitudinales (13) ont une forme en coin en plan.

12. Pneumatique pour véhicule selon l'une des revendications 1 à 8, caractérisé en ce que les gorges longitudinales (12) ont essentiellement une forme de losange en plan.

13. Pneumatique pour véhicule selon l'une des revendications précédentes, caractérisé en ce que la section totale des gorges longitudinales (10, 11, 12, 13, 14, 15) placées le long les unes des autres sur toute la bande de roulement est pratiquement constante en direction périphérique.

14. Pneumatique pour véhicule, en particulier selon l'une des revendications précédentes, la bande de roulement ayant des nervures, des barres, des blocs ou analogues qui délimitent des gorges longitudinales et transversales, caractérisé en ce que des gorges (22) disposées dans la direction de roulement (L) sont disposées au moins dans les parois transversales (20) des nervures, barres ou blocs (231) qui délimitent de préférence les gorges longitudinales (10, 11, 12, 13, 14, 15) dans la direction de roulement (L).

15. Pneumatique pour véhicule selon la revendication 14, caractérisé en ce que les gorges (22) ont une largeur (x) comprise entre 0,2 et 1,5 mm.

16. Pneumatique pour véhicule selon la revendication 14 ou 15, caractérisé en ce que les gorges (22) ont une longueur (Y) dans la direction de roulement (L) qui est comprise entre 2 et 8 mm.

17. Pneumatique pour véhicule selon l'une des revendications 14, 15 et 16, caractérisé en ce que les gorges (22) ont une section rectangulaire.

18. Pneumatique pour véhicule selon l'une des revendications 14, 15 et 16, caractérisé en ce que les gorges (22) ont une section en V.

19. Pneumatique pour véhicule selon la revendication 18, caractérisé en ce que la section en V a des surfaces latérales arrondies sous forme convexe (22).

20. Pneumatique pour véhicule selon la revendication 14, 15 ou 16, caractérisé en ce que les gorges (22) ont une section à gradins analogue à un escalier.
